# EUROPEAN PATENT SPECIFICATION

(11) **EP 3 631 311 B1**
(45) Date of publication and mention of the grant of the patent: **02.08.2023**
(21) Application number: 18809976.6
(22) Date of filing: 31.05.2018
(51) Int. Cl.: F24F 5/00, E04B 1/76

(54) **METHOD FOR COOLING A BUILDING, AND EVAPORATIVE COOLER APPARATUS**
VERFAHREN ZUM KÜHLEN EINES GEBÄUDES UND VERDAMPFUNGSKÜHLER
PROCÉDÉ DE REFROIDISSEMENT D'UN BÂTIMENT, ET APPAREIL DE REFROIDISSEMENT À ÉVAPORATION

(30) Priority: 02.06.2017 HU 1700240
(43) Date of publication of application: 08.04.2020
(73) Proprietor: Weeber, István, 9721 Gencsapáti (HU)
(72) Inventor: Weeber, István, 9721 Gencsapáti (HU)
(74) Representative: Kacsuk, Zsófia
(86) International application number: PCT/HU2018/050023
(87) International publication number: WO 2018/220410

(56) References cited:
- DE-A1-102011 108 601
- US-A- 2 266 321
- US-A- 4 761 965
- US-A1- 2012 174 606
- US-B1- 6 250 091
- US-B1- 6 250 091
- US-B1- 6 820 439

## Description

The object of the invention relates to a method for the cooling of the zones of a building that has an external surface divided into several zones and an internal space and of the microclimate in the vicinity of the zones.

The object of the invention also relates to evaporative cooler apparatus for the cooling of the external surface of a building with an external surface and internal space and of the microclimate in the vicinity of the external surface.

In continental climates the value of the solar radiation incident on horizontal surfaces, such as on flat-roofed buildings, in the summer months is in the region of 6-8 kWh/m². This value in Mediterranean, subtropical and tropical climates may be even higher than this.

The heat absorption factor of the insulation materials used on flat roofs is between 0.8-0.9 on average, which means that 80-90% of the heat energy originating from solar radiation is absorbed in the roof structure, and then is radiated towards the inside of the building. In the case of averaged sized industrial buildings with a floor area of approximately 10000 m² this represents 50000 kWh of heat energy per day, but in the case of sustained summer heat, this value could even be as much as 70-80000 kWh per day. This huge amount of heat is transmitted to the ceiling of the building at an average intensity of 6-800 watt/m², and then from there to the interior space of the building. In comparison, the output of ordinary floor heating is approximately 100 watt per square metre.

This situation is made even worse by the heat produced by the machinery in industrial buildings working with electric machines and processes that produce heat, which rises and is unable to leave through the hot roof, instead it gets stuck under the ceiling. The amount of heat produced by the machines is added to the solar heat load, and combined returns to the persons in the building as radiation heat load. It may be determined that the radiation heat load on the persons in the building has a much greater negative influence on their heating comfort than the increase of the temperature there. The increased heat load may cause dizziness, headaches, difficulties breathing or even fainting. The heat radiated from the building's ceiling may also cause disturbances in the measuring, hydraulic and precision units, as a consequence of which stoppages may become prolific and the amount of rejects increase. Roof covering dilation occurs due to the difference in the daytime and night-time temperatures, which may significantly shorten the lifetime of the roof covering and cause leaks.

An obvious solution to the above problems may seem to be improving the heat insulation of the roof. This, however, only increases the building's heat "oscillation", as although the heat absorbed by the roof gets into the interior of the building later, it prevents both the arriving heat and the heat produced by the machines from leaving.

Ventilation of the building does not represent an effective solution either, for several reasons. The temperature of the radiating surfaces has a much greater impact on human heating comfort than the temperature of the air. This is the principle on which ceiling infra-panels work. The other reason is that in the case of buildings with a floor area of several thousand square metres the interior working space is far away from the windows in the sidewalls, and the machines inside the building also prevent the flow of air. The external air temperature, typically in critical periods, is higher than the interior air temperature, so ventilation would just make things worse. As hot air rises upwards, towards the roof, releasing it may only be effectively performed in this direction, such as with heat chimneys and gravity ventilation equipment. However, the effectiveness of gravity ventilation is greatly impaired by the hot layer of air created under the ceiling. And precipitation, dust, insects, etc. may get in through open roof windows, which is not tolerable in most cases.

Another proposed solution may be the shading of the building's roof, which in the case of large roof surfaces, however, is very difficult to implement.

The most frequently used method for cooling the internal spaces of buildings is air-conditioning (such as the use of air-conditioning appliances, liquid coolers). This is both the most expensive and most energy-consuming solution, which, in addition to its high installation and operation costs, has numerous other disadvantages. In the case of large buildings, such as factory buildings, the air cooled down by air-conditioning units cannot be channelled to the interior of the factory from the walls economically, therefore, the majority of air-conditioning units need to be installed near to the area to be cooled, on the roof of the building. In the critical period not only does the surface of the roof heat up significantly but also the 1.5 to 2.5 m thick layer of air above it, creating a so-called "heat blanket", the temperature of which may exceed even 50 degrees Celsius. So on the most critical days from the point of view of their operation the exterior units of air-conditioning devices on the roof are located in a hot mass of air at a temperature of 40-50 degrees Celsius, in which the majority of devices shut down, or their electricity consumption and their requirement for maintenance drastically increase (by as much as 80%).

Spraying water onto the tops of buildings has been used for many years in the heat of summer in order to reduce the temperature of the roof. However, the disadvantage of cooling with water, as a cooling medium with a high specific heat capacity, is that it is not suitable for withdrawing a large amount of heat and also involves high water consumption.

The disadvantages of water spraying are overcome by systems operating on the principle of evaporation, which deliver a thin layer of water onto the roof of the building. Patent document number US 4,761 ,965 discloses such an evaporative cooling system, in the case of which the building roof is divided into several zones. As in the case of this solution only the temperature of the zones is measured and the watering times are adjusted on the basis of this, optimal evaporation conditions are not ensured. Patent number US 6,250,091 discloses a building cooling system and method the essence of which is that the degree of evaporation and the amount of water absorbed by the surface are determined by measurement. In the course of the disclosed method more liquid is only sprayed onto the surface after the water from the previous spraying has completely evaporated, in this way ensuring evaporation is maintained on the building's roof. The surface to be cooled (e.g. building roof or side wall) is divided into several zones, and each of the zones has its own one or more sprayers, as well as a thermometer and moisture sensor. The moistening of the zones takes place sequentially and independently of each other.

Patent number US 2266321 A discloses a roof cooling system for disposition upon an exposed roof surface, and comprising a plurality of spray heads disposed for substantially uniformly supplying a restricted uniform spray of moisture to said roof area. It comprises conduit means for supplying said spray heads with water at a restricted rate, and automatic valve means for said supply conduit, and control means for said valve comprising a heat responsive control unit located on said roof and operative under the influence of roof surface temperature conditions. Said last named means being operative to open said supply valve at a roof surface temperature of about 32°C (90°F) and to close said valve after a temperature drop of substantially not over 2.8°C (5°F).

Said temperature responsive means being enclosed In a ventilated housing resting upon said roof and said housing having an exposed top cover portion comprising a material corresponding to the outer surface layer of the roof.

Patent document US 6 250 091 B1 describes the features of the preamble of the independent claims, in particular a method and apparatus for efficiently applying a thin film of water on a solar energy impacted surface, especially a building. By measuring the rate of evaporation, and the level of absorption of fluid by the surface, the apparatus applies fluid at appropriate times to achieve nearly 100% evaporation, thereby maximizing its cooling effects. The apparatus controls multiple control valves, each valve supplying fluid to one or more spray nozzles, thereby minimizing the need for excessively large water supply pipes.

The disadvantage of the above solutions is that they do not sufficiently take into consideration any changed evaporation conditions, which, in a given case may lead to the zones drying out or to them being over-watered.

It was recognised that the evaporation of the water sprayed on the roof of the building is a complex process that is jointly determined by several environmental parameters (evaporation conditions), and continuous adaptation to the evaporation conditions is of fundamental importance in the interest of increasing the efficiency of evaporation and thereby of cooling.

It was also recognised that instead of jointly measuring the evaporation conditions influencing evaporation, by measuring the result of evaporation, especially the speed (rate) of evaporation it is possible to more effectively adapt to the current, actual evaporation processes, through which, in the case of sequential spraying divided into several zones, optimal evaporation and more efficient cooling may be realised.

The objective of the invention is to provide a method and apparatus that are free of the disadvantages of the solutions according to the state of the art, in other words that enable the withdrawal of heat from the external surface of a building through optimal evaporation that corresponds to the evaporation processes of the liquid spray.

The invention is based on the recognition that instead of jointly measuring the evaporation conditions influencing evaporation, by measuring the result of evaporation, especially the speed (rate) of evaporation, in the case of sequential spraying divided into several zones, it is possible to more effectively adapt to the evaporation conditions, in other words to more effectively regulate the amount of liquid sprayed onto the external surface of the building or over the surface, through which optimal evaporation and effective cooling can be realised.

In accordance with the invention the task was solved with the method according to claim 1.

Furthermore the task set for the invention was solved with the evaporative cooler apparatus according to claim 8.

Preferred embodiments of the invention are determined in the dependent claims.

Further details of the invention will be explained by way of exemplary embodiments with reference to the figures, wherein

Figure 1a depicts a schematic perspective view of a preferred embodiment of an evaporative cooler apparatus according to the invention,

Figure 1b depicts a schematic top view of the evaporative cooler apparatus shown in figure 1a,

Figure 2 depicts a schematic top view of another preferred embodiment of the evaporative cooler apparatus according to the invention.

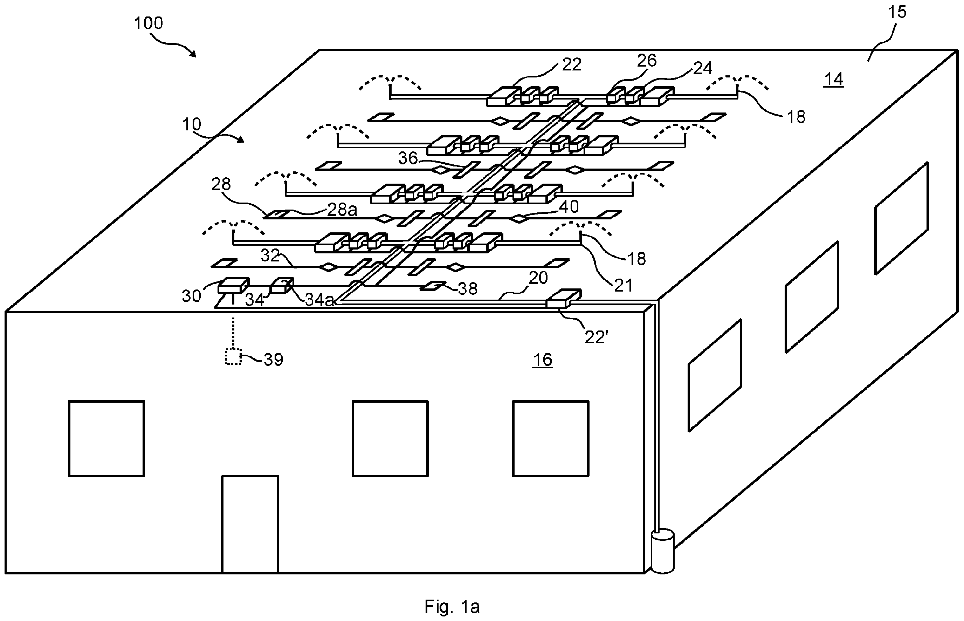

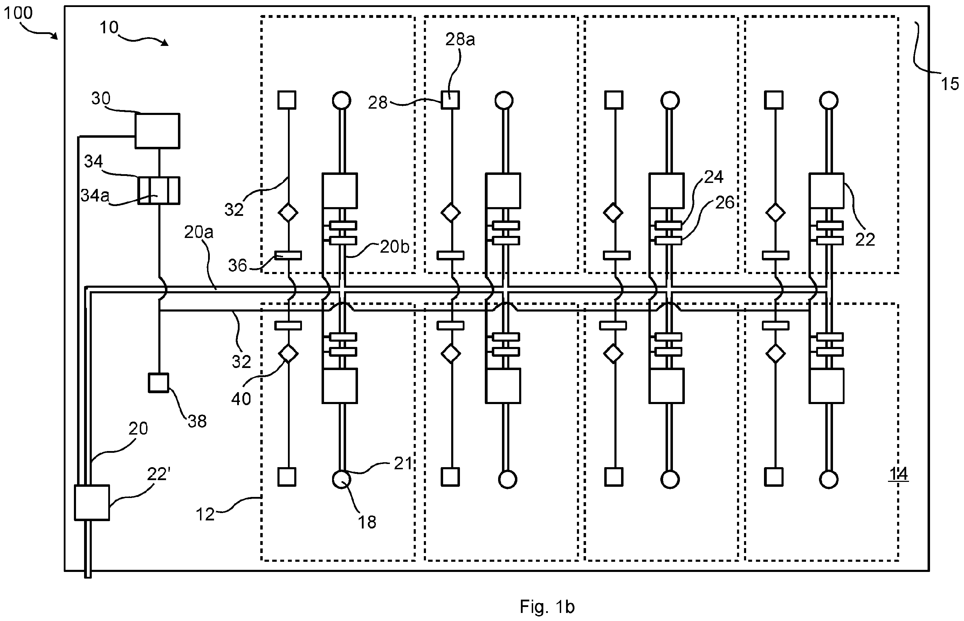

Schematic perspective and top views of a preferred embodiment of an evaporative cooler apparatus 10 according to the invention can be seen in figures 1a and 1b. The apparatus 10 serves for cooling the zones 12 of a building 100 that has an external surface 14 divided into zones 12 and an internal space 16, and the microclimates in the vicinity of the zones 12. In the context of the present invention the external surface 14 of the building 100 is understood to mean its roof 15, preferably its flat roof 15, but optionally an embodiment may be conceived in the case of which the external surface 14 is the building's 100 gable roof or side wall, etc.

The apparatus 10 contains nozzles 18 arranged in zones 12 serving for moistening the zones 12 and the air layer located above them with a liquid spray, preferably water spray. The nozzles 18 are spray heads serving for dispensing water and breaking it up into small droplets, in other words a liquid spray, which evenly distributes the liquid into the air space above the surface of the zones 12 and onto their surface. The liquid spray created by the nozzles 18 creates a thin film of liquid when it gets onto the surface of the zones 12, which on evaporating from there extracts heat from the external surface 14, thereby cooling the zones 12 and the microclimate in the vicinity. Thin film of liquid is understood to mean a liquid layer of a thickness that does not remain, does not run and does not form puddles on the roof 15.

With respect to their operating principle the nozzles 18 may be mechanical, pneumatic, hydraulic or use a combined system. In terms of their design they may be disc sprayers, injection sprayers, air sprayers, impact or circulation sprayers, or vortex sprayers, as is known by a person skilled in the art.

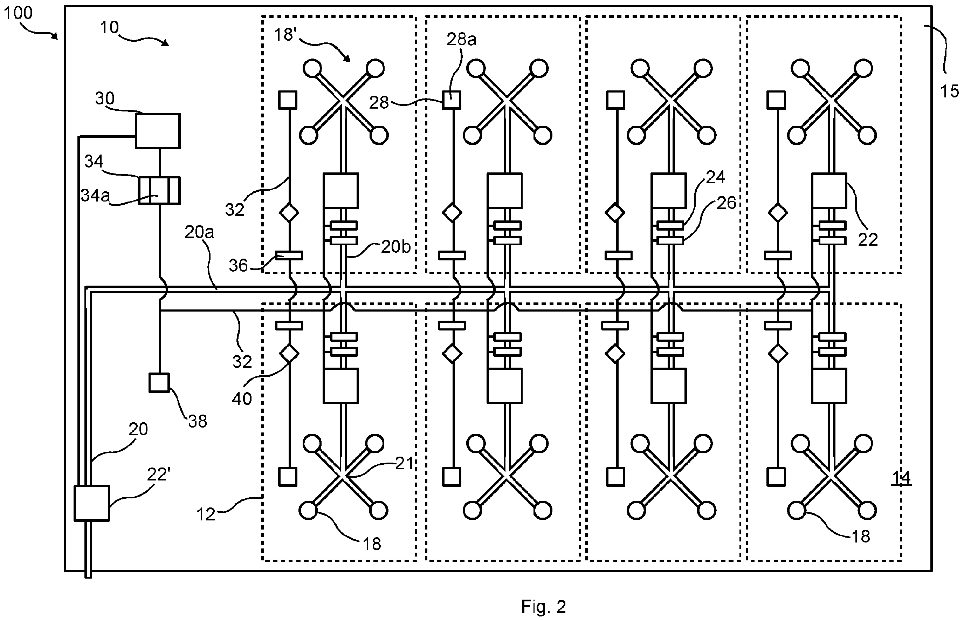

One nozzle 18 is arranged in one zone 12, or in the case of a large or heterogeneous zone 12 there may be a group of nozzles 18' arranged in the zone 12, as in the way illustrated in figure 2, for example. Naturally, the nozzles 18 comprising the group of nozzles 18' may be arranged in other ways, such as along a straight line. In the context of the present invention a zone 12 is understood to mean that part of the external surface 14 that the given nozzle 18 or group of nozzles 18' is able to supply with liquid spray. It should be noted that the external surface 14 may have parts that do not belong to any zone 12, in other words that none of the nozzles 18 spray liquid onto.

The apparatus 10 according to the invention contains pipelines 20 connected to the nozzles 18 serving for supplying the nozzles 18 with liquid, and valves 22 serving to regulate the liquid transmitting ability of the pipelines 20. In the context of the present invention valve 22 means a remotely controlled valve 22, preferably an electrohydraulic valve 22, but optionally the use of other remotely controlled valves 22 (such as a magnetic valve, etc.) is conceivable, as is obvious for a person skilled in the art.

The pipeline 20 suitable for transporting liquid has one or more inlets and outlets 21 connected to the nozzles 18. The liquid gets into the pipeline 20 via one or more inlets, then leaves it via the outlets 21 and then through the nozzles 18. The inlet of the pipeline 20 may optionally be connected to a liquid tank, well, or even, for example, directly to the water mains. The transporting of the liquid in the pipeline 20 may be carried out by using a pump connected to the liquid tank, for example, or by using the pressure of the water mains. The pipeline 20 preferably contains a main pipe 20a running all the way along the roof 15 of the building 100, and branch pipes 20b branching off it connected to the nozzles 18 of the zones 12. In the case of a preferred embodiment there is a main valve 22' connected to the main pipe 20a, which if closed shuts off the flow of liquid in the pipeline 20. In the case of an especially preferred embodiment the pipeline 20 is made from a flexible material that is preferably resistant to UV radiation. The pipeline 20 is arranged along the external surface 14 of the building 100 in such a way as to allow the dilation of the pipeline 20, its longitudinal and lateral movement. Optionally the pipeline 20 is indirectly secured to the roof 15 of the building 100 with the use of spacer elements (not illustrated) permitting dilation and longitudinal and lateral movement, but embodiments may also be conceived in the case of which the pipeline 20 is not secured to the roof 15 at all.

In the case of a preferred embodiment of the apparatus 10 contains one or more flow meter sensors 24 serving for measuring the amount of liquid flowing through the cross-section of the pipeline 20 and/or one or more pressure measuring sensors 26 serving for measuring the pressure and change of pressure of the liquid flowing through the cross-section of the pipeline 20, preferably a pressure transducer, the function of which will be explained subsequently.

The evaporative cooler apparatus 10 contains an electronic central unit 30 suitable for receiving, processing and storing data in operation connection with the valves 22, and preferably with the main valve 22', and in data connection with the moisture measuring sensors 28 arranged in the zones 12. In the context of the present invention the concept of central unit 30 is interpreted broadly, and includes all hardware devices capable of collecting and processing data and, on the basis of this, controlling the valves, and preferably the main valve 22', such as a computer, laptop, SoC, microcontroller, etc. Optionally an embodiment may be conceived in the case of which the central unit 30 is connected to a local or global network (e.g. the Internet), and the data received and processed by the central unit 30 may be downloaded from the central unit 30 via the network, and the central unit 30 may also be remotely controlled via the network.

The apparatus 10 according to the invention contains moisture measuring sensors 28 arranged in the zones serving for determining the percentage of moisture on the external measuring surface 28a and the percentage of drying rate. The external measuring surface 28a is preferably provided as a flat surface. In a given zone 12 one or optionally more sensors 28 are secured to the external surface 14, preferably in such a way that the plane of the external measuring surface 28a is substantially parallel to the external surface 14 under it. The sensor 28 may be, for example, a capacitive, resistive, or other sensor, e.g. operating on the basis of an optical principle, as is known by a person skilled in the art.

The moisture measuring sensor 28 is capable of determining the amount of moisture present on the external measuring surface 28a, in other words determining the percentage of the area of the measuring surface 28a that is covered with liquid. In other words the percentage of moisture on the measuring surface 28a is understood to mean the percentage ratio of the area of the measuring surface 28a covered with liquid as compared to the entire area of the measuring surface 28a. In other words the higher the percentage of moisture value is the more liquid spray is present on the measuring surface 28a.

In the context of the present invention the percentage of drying rate is understood to mean the speed of drying of the liquid on the measuring surface 28a, in other words the value that shows how the percentage ratio of the area of the external measuring surface 28a covered with liquid and the total area of the external measuring surface 28a changes over a unit of time.

In the case of a preferred embodiment the coefficient of heat transmission of the measuring surface 28a of the moisture measuring sensor 28, and/or its spectral emissivity, and/or its adsorption coefficient are selected to correspond with the coefficient of heat transmission, and/or spectral emissivity, and/or adsorption coefficient of the external surface 14 of the building 100. With this it may be ensured that the drying characteristics of the measuring surface 28a and of the external surface 14 of the building 100 are as close to each other as possible, in other words so that the percentage of moisture values measured by the sensor 28 are as close to the percentage of moisture values actually present on the external surface 14 as possible.

In the case of a preferred embodiment the central unit 30 is in a data connection with the flow meter sensor 24 and the pressure measuring sensor 26 connected to the pipeline 20, as a result of this any fault (e.g. a leak in the pipeline 20 or a blockage in the nozzles 18) may be detected, and by regulating the main valve 22' or the valves 22 the fault may be temporarily averted, and even an automatic message may be sent about the fault through the network.

An embodiment is also conceivable in the case of which the moisture measuring sensor 28 is connected to a processing unit 36 that is capable of processing the measured data and transmitting them to the central unit 30. The processing unit 36 is understood to mean, similarly to the central unit 30, an electronic device capable of receiving, processing, forwarding and preferably storing data, which may be, for example, a computer, SoC, microcontroller, etc. In the case of an exemplary embodiment the processing unit 36 is interposed between the sensor 28 and the central unit 30, and its task is to pre-process the data measured by the sensors 28 and to transmit the pre-processed data to the central unit 30. The apparatus 10 according to the invention may contain one or more processing units 36, and one or more sensors 28 may be connected to one processing unit 36.

In the case of a preferred embodiment of the apparatus 10 according to the invention the operation connection between the central unit 30 and the valves 22, and/or the data connection between the central unit 30 and the sensors 28 is realised with an electric cable 32 ensuring signal transmission, as it can be seen in figures 1a to 2. In this case the electricity required to operate the valves 22 and the sensors 28 is preferably provided through the electric cable 32. Naturally embodiments may be conceived in the case of which the above operation connection and/or the data connection is partially or completely carried out in a wireless manner, for example, using Bluetooth, ZigBee, WiFi, or other wireless technology, as is obvious for a person skilled in the art. In this case the valves 22 and the sensors 28 have independent power sources (such as built in battery or connection the electricity network).

In the case of a preferred embodiment the electric cables 32 are provided with a protective cover providing protection against the weather and overvoltage. The protective cover may be made from UV-resistant polyethylene, or other electrically insulating, weather-resistant material. In the case of a preferred embodiment the electric cables 32 are arranged as far as possible from the lightning conductors running along the external surface 14 of the building 100. One or more lightning and overvoltage protection elements 34, preferably opto-coupler 34a, suitable of ensuring signal transmission are interposed in the cable operation connection between the central unit 30 and the one or more valves 22 and/or in the data connection between the central unit 30 and the one or more moisture measuring sensors 28, which prevent overvoltage generated by lightning strikes from being propagated in the electric cable 32. An opto-coupler 34a is an electronic element that ensures unidirectional or bidirectional signal or data transmission without any metal connection between circuits at various voltage levels using light impulses. The opto-coupler 34a element contains a diode and light sensor device, as is known by a person skilled in the art.

Several control programs containing first percentage of moisture values are stored in the central unit 30 according to the invention. Each control program contains one first percentage of moisture value. It should be noted that the first percentage of moisture values stored by the various control programs are not necessarily different to each other, in other words there may be control programs whose first percentage of moisture values are the same. In the context of the present invention the control program is understood to mean a series of instructions stored as a set of bits written in any programming language and that can be executed by the central unit 30. The central unit 30 is configured so as to be capable of receiving and processing the percentage of drying rate data measured by the moisture measuring sensor 28, selecting a control program from among the several stored control programs by using the received percentage of drying rate data, and opening the valve 22 connected to the pipeline 20 of the nozzle 18 or group of nozzles 18' belonging to the zone 12 of the moisture measuring sensor 28 in the case that the first percentage of moisture value stored in the selected control program is reached, thereby moistening the given zone 12 with liquid spray.

For the sake of clarity it should be noted that in the present specification value, e.g. first percentage of moisture value is understood to mean a piece of data given or stored in digital form. Therefore, the central unit 30 is adapted for receiving and processing the percentage of moisture data measured by the sensor 28, comparing the received and processed percentage of moisture data with the first percentage of moisture value data stored in the selected control program, and, if any of the received percentage of moisture values are lower than the first percentage of moisture value, opening the valve 22 regulating the liquid supply to the nozzle 18 arranged in the given zone 12.

In the case of an exemplary embodiment in addition to the first percentage of moisture value the control program also stores a second moisture value higher than the first percentage of moisture value, and the central unit 30 is configured to close the one or more valves 22 in the case the second percentage of moisture value is reached. Therefore, in the case of this embodiment the central unit 30 is set up to open the valve 22 in the case the first percentage of moisture value is reached and close it when the second percentage of moisture value is reached.

In the case of another exemplary embodiment in addition to the first percentage of moisture value the control program also stores spraying duration value, and the central unit 30 is configured to open the one or more valves 22 in the case that the first percentage of moisture value is reached and to close them after an amount of time has passed that corresponds to the spraying duration value.

In the case of the above embodiments the central unit 30 continuously or at given intervals receives the percentage of moisture data and the percentage of drying rate data measured by the sensors 28, then on the basis of the percentage of drying rate data it selects a control program from among the stored control programs and runs (executes) it. The selection and execution of the control programs preferably takes place per zone 12, in other words if necessary different control programs are selected and executed per zone 12 in accordance to the various weather and evaporation conditions prevailing in the zones 12. Following this the central unit 30 compares the percentage of moisture data received from the sensors 28 located in the various zones 12 to the first percentage of moisture value stored in the control program selected for the given zone 12, and if the received percentage of moisture value is lower than the first percentage of moisture value stored in the control program, it opens the valve 22 of the pipeline 20 of the nozzle 18 in the given zone 12, and moistens the given zone 12 with liquid spray. In the case of those embodiments in which the control program contains a second percentage of moisture value, the moistening of the zone 12 lasts as long as the percentage of moisture value received from the sensor 28 arranged in the zone 12 is lower than the second percentage of moisture value stored in the control program. In the case of those embodiments in which the control program contains spraying duration value the valve 22 is open for a duration corresponding to the spraying duration value stored in the control program, in other words the moistening of the zone 12 last for a duration corresponding to the spraying duration value.

The apparatus 10 according to the invention preferably contains an external control sensor 38 capable of measuring temperature in a data connection with the central unit 30 and arranged outside of the zones 12 and the building 100, and an internal control sensor 39 capable of measuring temperature in a data connection with the central unit 30 and arranged in the internal space 16 of the building 100. The control sensors 38, 39 may be thermometers operating on the basis of any principle (e.g. thermocouples, resistance thermometers, etc.) that are capable of measuring the ambient temperature and forwarding it to the central unit 30. The control sensor 38 measures the ambient temperature of the part of the external surface 14 outside of the zone 12, and the control sensor 39 measures the ambient temperature of the internal space 16 under the zones 12. The data connection between the central unit 30 and the control sensors 38, 39 is preferably also realised with the electric cables 32, but, optionally, embodiments are conceivable in which the data connection is realised using wireless technology.

The external control sensor 38 is arranged outside of the internal space 16 of the building 100, preferably on a part of the roof 15 far from the nozzles 18, outside of the zones 12, but an embodiment is conceivable in the case of which the control sensor 38 is not located on the building 100, instead on a neighbouring building, for example. The internal control sensor 39 is arranged in the internal space 16 of the building 100, preferably under the zones 12, on the ceiling of the building 100. Optionally the apparatus 10 contains several control sensors 38, 39 in the case of a larger sized, or heterogeneous building 100 from the point of view of evaporation or cooling demand.

In the case of an especially preferred embodiment the apparatus contains temperature sensors 40 arranged in the zones 12 in a data connection with the central unit 30, preferably one per zone 12. Naturally an embodiment is conceivable in which the zones 12 contain several temperature sensors 40. The temperature sensors 40 may be thermometers operating on the basis of any principle (e.g. thermocouple, resistance thermometer, etc.) that are capable of measuring the temperature prevalent in the zone 12 and forwarding it to the central unit 30. The temperature sensor 40 may be preferably integrated with the moisture measuring sensor 28, thereby simplifying installing the apparatus 10 onto the building 100.

In the case of an exemplary embodiment of the apparatus 10 according to the invention, the central unit 30 is configured to take the temperature data received from the external and internal control sensors 38, 39 and the temperature data received from the temperature sensors 40 into consideration when selecting the control program. In other words, the central unit 30 selects the control program on the basis of the percentage of drying rate data, the temperature data received from the control sensors 38, 39 and the temperature data received form the temperature sensors 40. The control programs are configured to allocate a first percentage of moisture value, a second percentage of moisture value or, optionally, a spraying duration value to the temperatures measured by the control sensors 38, 39 and by the temperature sensor 40 with which the cooling of the given zone 12 with the evaporation of the liquid spray, and the operation of the apparatus is optimal. The concept of optimal cooling and operation also includes the case when the spraying of the zone 12 is stopped, because, for example, on the basis of the low temperature data measured by the external control sensor 38 and/or by the internal control sensor 39 cooling of the zones 12 is unnecessary. In the case of another possible example, if the temperature measured by the temperature sensor 40 does not drop significantly compared to the temperature measured by the external control sensor 38 even in spite of the spraying, spraying of the zone 12 is stopped and replaced by watering.

The object of the invention also relates to a method for the cooling of the zones 12 of a building 100 that has an external surface 14 divided into one or more zones 12 and an internal space 16 and of the microclimate in the vicinity of the zones 12. The method is preferably implemented with the evaporative cooler apparatus 10 according to the invention. In the course of the method nozzles 18 serving for dispensing a liquid spray, preferably water spray, pipelines 20 connected to the nozzles 18 for supplying the nozzles 18 with liquid and valves 22 connected to the pipelines 20 for regulating the liquid transmission ability of the pipelines 20 are arranged in the zones 12. The pipelines 20 are preferably made from a flexible material, such as polyethylene or rubber, and are arranged over the external surface 14 of the building 100 so as to permit dilation of the pipelines 20 and their longitudinal and lateral movement. One or more flow meter sensors 24 serving for measuring the amount of liquid flowing through the cross-section of the pipeline 20 and/or one or more pressure measuring sensors 26 serving for measuring the pressure and change of pressure of the liquid flowing through the cross-section of the pipeline 20 are preferably connected to the pipeline 20 in a way known by a person skilled in the art. The flow meter sensor 24 and the pressure measuring sensor 26 forward the measured data to the central unit 30, so any fault (e.g. a leak in the pipeline 20 or a blockage in the nozzles 18) may be detected in time, dealt with automatically and error messages can be sent about them also automatically.

The external surface 14 of the building 100 is preferably divided into 5 to 15 zones 12, more preferably into 8 to 12 zones, and moisture measuring sensors 28 provided with an external measuring surface 28a serving for measuring the percentage of moisture on the measuring surface 28a are arranged in the zones 12. It should be noted that embodiments are optionally conceivable in the case of which more than 15 or less than 5 zones are established, for example just one single zone 12. In the case of a preferred embodiment the coefficient of heat transmission, and/or spectral emissivity, and/or adsorption coefficient of the external surface 14 of the building 100 are determined in a way known of in itself, and the measuring surface 28a of the sensor 28 is provided so that the value of its the coefficient of heat transmission, and/or spectral emissivity, and/or adsorption coefficient substantially corresponds to the determined values. Providing the measuring surface 28a in this way it may be ensured that the drying characteristics of the measuring surface 28a and of the external surface 14 of the building 100 are as close to each other as possible, in other words so that the percentage of moisture values measured by the sensor 28 are as close to the percentage of moisture values actually present on the external surface 14 as possible.

It was recognised that moistening the entire external surface 14 of the building 100 is difficult to implement in practice due to a limited water supply and/or water pressure, especially in the case of larger buildings, such as factories, public buildings, retail stores, etc. Therefore it is necessary to moisten the external surface 14 divided into zones 12 per zone 12, sequentially, in other words only one or maximum of a few zones 12 are moistened at the same time, then after moistening spraying is continued in another zones 12.

In the course of the method according to the invention a central unit 30 is provided that is in operation connection with the valves 22 and in data connection with the moisture measuring sensors 28. The data connection can be made in the previously mentioned wired or wireless way. The data measured by the moisture measuring sensors 28 are sent to the central unit 30, and the valves 22 are controlled by the central unit 30 on the basis of the data received.

In addition to measuring the percentage of moisture of the measuring surface 28a the moisture measuring sensor provided with a measuring surface 28a is set up to be also capable of measuring percentage of drying rate. This may be realised, for example, by measuring the percentage of moisture value of the measuring surface 28a at specified intervals and comparing the measurement results to each other. In the course of the method according to the invention several control programs stored in the central unit 30 are provided that correspond to various percentage of drying rate values, which control programs store various first percentage of moisture values.

The percentage of drying rate data measured by the moisture measuring sensor 28 are received and processed by the central unit 30, then by using the drying rate data obtained the control program that corresponds to the drying rate data is selected from among the several stored control programs. In other words, the central unit 30 loads the control program that belongs to the percentage of drying rate value depending on the percentage of drying rate value, as input parameter, received (e.g. a given control program belongs to a given percentage of drying rate value range). Subsequently the percentage of moisture on the external measuring surface 28a is measured using the moisture measuring sensor 28, and if the measured moisture value drops to the first percentage of moisture value stored in the selected control program or below it, the valve 22 of the pipeline 20 of the nozzle 18 in the zone 12 of the moisture measuring sensor 28 is opened, and the liquid spray is dispensed onto the given zone 12 via the nozzle 18.

In the case of a preferred embodiment a second percentage of moisture value that is greater than the first percentage of moisture value is stored in the control program. When the valve 22 is opened liquid spray is dispensed onto the zone 12 and onto the measuring surface 28a arranged there, thereby increasing the percentage of moisture value measured by the sensor 28. If the percentage of moisture value measured by the sensor 28 reaches the second percentage of moisture value stored in the selected control program, the central unit 30 closes one or more valves 22 of the given zone 12.

Another preferred embodiment differs from the previous embodiment only in that spraying duration is stored in the control program instead of the second percentage of moisture value, and after being opened the one or more valves 22 are closed after an amount of time has passed that corresponds to the spraying duration.

In the case of sequential moistening the number of zones 12 is preferably taken into account when determining the first and second percentage of moisture values and the spraying duration values stored in the control programs. For example, in the case of an external surface 14 divided into fewer zones 12 the first and second percentage of moisture values are selected to be lower and the spraying duration is selected to be greater in the control program corresponding to a given measured percentage of drying rate than in the case the external surface 14 is divided into a larger number of zones 12. In other words: in the case of the same percentage of drying rate but a large number of zones 12, or the same number of zones 12 but greater percentage of drying rate, the zones 12 have to be moistened more. In other words a thicker liquid film is dispensed onto the given zone 12 and the zone 12 is kept in a more moist condition in the interest of it not drying out until, in the course of the sequential moistening, it is again the given zone's 12 turn to be moistened.

In the case of a preferred embodiment external and internal control sensors 38, 39 capable of measuring temperature and in a data connection with the central unit 30 are arranged on the building 100 outside of the zones 12 and in the internal space 16 of the building 100. In the case of this embodiment the control program is selected using the central unit 30 with consideration to the temperature data measured by the external and internal control sensors 38, 39. In other words, the central unit 30 selects the control program on the basis of the percentage of drying rate value and the temperature data received from the control sensors 38 39. For example, in the case when the external control sensor 38 and/or the internal control sensor 39 signal low temperature, the central unit 30 selects a control program that stops the spraying of the zone 12.

In the case of another preferred embodiment temperature sensors 40 in data connection with the central unit 30 are arranged in the zones 12, and the central unit 30 selects the control program also with consideration to the temperature data received from the temperature sensors 40. For example, in the case of high humidity, when the temperature measured by the temperature sensor 40 does not drop by the desired extent as compared to the temperature measured by the external control sensor 38 in spite of the moistening, the central unit 30 selects a control program that keeps the valves 22 open and continuously waters the zones 12 (watering operation mode).

The evaporative cooler apparatus 10 and method according to the invention may be effectively combined with traditional cooling technologies. Using the apparatus 10 the amount of heat that air-conditioners and other active cooling technologies would have to take out of the building 100 can be reduced by an extent in excess of the solar heat load incident on the roof 15 of the building 100. Due to this the operating time of the air-conditioning units can be significantly reduced. By using the apparatus 10 the temperature of the environment of the air-conditioning units located on the roof 15 characteristically heated up to 60-80 degrees Celsius in the summer heat cools down from 45-55 degrees Celsius above the roof 15 back to 28-38 degrees Celsius, therefore the specific power consumption of the air-conditioning units (for one unit of time) falls by as much as 60-80 per cent, the number of these units can also be reduced, and their lifetime and operation reliability increase.

By using the apparatus 10 according to the invention the heat dilation of the roof 15 can be terminated, or reduced to a minimum. By minimising dilation, in practice, cracks and leaks in the roof covering no longer occur. Another advantage of the apparatus 10 and method according to the invention is that it does not use or create environmentally damaging or greenhouse effect substances. Industrial water (water not suitable for drinking, obtained from the groundwater, or collected from precipitation or recycled water) is sufficient for its operation, its energy consumption is minimal, its improves the internal conditions of the building 100 not to the detriment of the microclimate around the building 100, but expressly along with the microclimate of the environment.

Various modifications to the above disclosed embodiments will be apparent to a person skilled in the art without departing from the scope of protection determined by the attached claims.

## Claims

1. Method for the cooling of a plurality of zones (12) and of a microclimate in the vicinity of the plurality of zones (12) of a building (100) that has an external surface (14) divided into the plurality of zones (12) and an internal space (16), the method comprises:
- arranging nozzles (18) for dispensing liquid spray, preferably water spray in the zones (12),
- providing pipelines (20) connected to the nozzles (18) for supplying the nozzles (18) with liquid,
- providing valves (22) connected to the pipelines (20) for regulating the liquid flow rate in the pipelines (20),
- arranging moisture measuring sensors (28) provided with an external measuring surface (28a) in the zones (12) of the external surface (14) of the building (100) for measuring a percentage of moisture on the external measuring surface (28a),
- providing a central unit (30) in operational connection with the valves (22), and in data connection with the moisture measuring sensors (28),
**characterised by** that the moisture measuring sensor (28) provided with the external measuring surface (28a), in addition to being adapted for measuring the percentage of moisture on the external measuring surface (28a), it is also adapted for measuring a percentage of drying rate, and in the course of the method:
- measuring the percentage of moisture on the external measuring surface (28a) using the moisture measuring sensor (28) and determining the percentage of drying rate data,
- providing a plurality control programs stored in the central unit (30), which control programs store various first percentage of moisture values,
- receiving and processing the percentage of drying rate data and the percentage of moisture data measured by the moisture measuring sensor (28) using the central unit (30),
- selecting a control program from among the plurality of stored control programs using the percentage of drying rate data received, and
- opening the valve (22) of the pipeline (20) of the nozzle (18) in the zone (12) of the moisture measuring sensor (28) if the percentage of moisture value received is lower than the first percentage of moisture value stored in the selected control program, and dispensing liquid spray with the nozzle (18) onto the given zone (12).

2. The method according to claim 1, **characterised by** storing a spraying duration value or a second percentage of moisture value greater than the first percentage of moisture value in the control program, and, after opening the one or more valves (22) of the given zone (12) closing them after a period of time has passed that corresponds to the spraying duration value or after the second percentage of moisture value is reached in the given zone (12).

3. The method according to claim 1 or 2, **characterised by** arranging external and internal control sensors (38, 39) outside of the building (100) and the zones (12) and in the internal space (16) of the building (100), which sensors (38, 39) are in a data connection with the central unit (30) and being capable of measuring temperature, and selecting the control program using the central unit (30) with consideration to the temperature data measured by the external and internal control sensors (38, 39).

4. The method according to any of claims 1 to 3, **characterised by** arranging temperature sensors (40) in a data connection with the central unit (30) in the zones (12), and selecting the control program with consideration to the temperature data received from the temperature sensors (40) using the central unit (30).

5. The method according to any of claims 1 to 4, **characterised by** providing one or more flow meter sensors (24) for measuring the amount of liquid flowing through the cross-section of the pipeline (20) and/or one or more pressure measuring sensors (26) for measuring the pressure and the change of pressure of the liquid flowing through the cross-section of the pipeline (20), preferably a pressure transducer, in a data connection with the central unit (30), receiving and processing the data measured by the flow meter sensor (24) and/or the pressure measuring sensor (26) using the central unit (30), and selecting the control program with consideration to the received and processed data using the central unit (30).

6. The method according to any of claims 1 to 5, **characterised by** providing a moisture measuring sensor (28) having a measuring surface (28a) with a coefficient of heat transmission, and/or spectral emissivity, and/or adsorption coefficient that corresponds to the coefficient of heat transmission, and/or spectral emissivity, and/or adsorption coefficient of the external surface (14) of the building (100).

7. The method according to any of claims 1 to 6, **characterised by** dividing the external surface (14) of the building (100) into 5 to 15, preferably 8 to 12 zones (12).

8. Evaporative cooler apparatus (10) for the cooling of a plurality of zones (12) and of a microclimate in the vicinity of the plurality of zones (12) of a building (100) that has an external surface (14) divided into the plurality of zones (12) and an internal space (16), which evaporative cooler apparatus (10) comprises:
- nozzles (18) arranged in zones (12) for moistening the zones (12) with a liquid spray, preferably water spray,
- pipelines (20) connected to the nozzles (18) for supplying liquid to the nozzles (18),
- valves (22) connected to the pipelines (20) for regulating the flow of the liquid in the pipelines (20),
- moisture measuring sensors (28) provided with an external measuring surface (28a) arranged in the zones (12) for measuring a percentage of moisture of the external measuring surface (28a), and
- an electronic central unit (30) in operational connection with the valves (22) and in data connection with the moisture measuring sensors (28) arranged in the zones (12), the electronic central unit (30) being suitable for receiving, processing and storing data, **characterised by** that the moisture measuring sensor (28) provided with the external measuring surface (28a) is adapted for measuring the percentage of drying rate of the external measuring surface (28a), and a plurality of control programs specifying first percentage of moisture values are stored in the central unit (30), which central unit (30) is configured to:
- receive and process the percentage of drying rate data measured by the moisture measuring sensor (28),
- select a control program from the plurality of stored control programs based on the received percentage of drying rate data, and
- open the valve (22) connected to the pipeline (20) of the nozzle (18) belonging to the zone (12) of the moisture measuring sensor (28) in the case that the first percentage of moisture value stored in the selected control program is reached, thereby moisten the given zone (12) with liquid spray.

9. The evaporative cooler apparatus (10) according to claim 8, **characterised by** that a spraying duration value or a second moisture value higher than the first percentage of moisture value is stored in the control program, and the central unit (30) is configured to open the one or more valves (22) in the case when the first percentage of moisture value is reached and to close them after an amount of time has passed that corresponds to the spraying duration value, or when the second percentage of moisture value is reached.

10. The evaporative cooler apparatus (10) according to claim 8 or 9, **characterised by** that it comprises
- an external control sensor (38) suitable for measuring temperature and being in data connection with the central unit (30) and arranged outside of the zones (12) and the building (100), and
- an internal control sensor (39) suitable for measuring temperature and being in data connection with the central unit (30) and arranged in the internal space (16) of the building (100), and the central unit (30) is configured to take the temperature data received from the external and internal control sensors (38, 39) into consideration when selecting the control program.

11. The evaporative cooler apparatus (10) according to any of claims 8 to 10, **characterised by** that it contains temperature sensors (40) arranged in the zones (12) and being in data connection with the central unit (30), and the central unit (30) is configured to take the temperature data received from the temperature sensors (40) into consideration when selecting the control program.

12. The evaporative cooler apparatus (10) according to any of claims 8 to 11, **characterised by** that the coefficient of heat transmission, and/or spectral emissivity, and/or adsorption coefficient of the measuring surface (28a) of the one or more moisture measuring sensors (28) is selected to correspond to the coefficient of heat transmission, and/or spectral emissivity, and/or adsorption coefficient of the external surface (14) of the building (100).

13. The evaporative cooler apparatus (10) according to any of claims 10 to 12, **characterised by** that the operation connection between the central unit (30) and the one or more valves (22), and/or the data connection between the central unit (30) and the one or more moisture measuring sensors (28), and/or between the central unit (30) and the external and internal control sensors (38, 39) is provided with electric cables (32) ensuring signal transmission, and one or more lightning and overvoltage protection elements (34), preferably opto-couplers (34a), suitable of ensuring signal transmission are installed in the cable operation connection between the central unit (30) and the one or more valves (22) and/or in the data connection between the central unit (30) and the one or more moisture measuring sensors (28).

14. The evaporative cooler apparatus (10) according to any of claims 8 to 13, **characterised by** that at least one moisture measuring sensor (28) is connected to a processing unit (36) capable of processing the measured data and transmitting them to the central unit (30).

15. The evaporative cooler apparatus (10) according to any of claims 8 to 14, **characterised by** that the valve (22) is provided as an electrohydraulic valve (22).

16. The evaporative cooler apparatus (10) according to any of claims 8 to 15, **characterised by** that the pipeline (20) comprises one or more flow meter sensors (24) for measuring the amount of liquid flowing through the cross-section of the pipeline (20) and/or one or more pressure measuring sensors (26) for measuring the pressure and the change of pressure of the liquid flowing through the cross-section of the pipeline (20), preferably a pressure transducer.

## Patentansprüche

1. Verfahren zur Kühlung einer Vielzahl von Zonen (12) und eines Mikroklimas in der Nähe der Vielzahl von Zonen (12) eines Gebäudes (100), das eine in die Vielzahl von Zonen (12) unterteilte Außenfläche (14) und einen Innenraum (16) aufweist, wobei das Verfahren umfasst:
- Anordnen von Düsen (18) zum Abgeben von Flüssigkeitsnebel, bevorzugt Wassernebel, in den Zonen (12),
- Bereitstellen von mit den Düsen (18) verbundenen Rohrleitungen (20) zum Versorgen der Düsen (18) mit Flüssigkeit,
- Bereitstellen von Ventilen (22), die mit den Rohrleitungen (20) verbunden sind, um die Flüssigkeitsdurchflussgeschwindigkeit in den Rohrleitungen (20) zu regulieren,
- Anordnen von mit einer Außenmessfläche (28a) bereitgestellten Feuchtigkeitsmesssensoren (28) in den Zonen (12) der Außenfläche (14) des Gebäudes (100) zum Messen eines Feuchtigkeitsprozentsatzes auf der Außenmessfläche (28a),
- Bereitstellen einer Zentraleinheit (30) in Wirkverbindung mit den Ventilen (22) und in Datenverbindung mit den Feuchtigkeitsmesssensoren (28),
**dadurch gekennzeichnet, dass** der mit der Außenmessfläche (28a) bereitgestellte Feuchtigkeitsmesssensor (28) zusätzlich zum Messen des Feuchtigkeitsprozentsatzes auf der Außenmessfläche (28a) auch zum Messen eines Prozentsatzes des Trocknungsgeschwindigkeit angepasst ist, und im Verlauf des Verfahrens:
- Messen des Feuchtigkeitsprozentsatzes auf der Außenmessfläche (28a) unter Verwendung des Feuchtigkeitsmesssensors (28) und Bestimmen des Prozentsatzes der Trocknungsgeschwindigkeitsdaten,
- Bereitstellen einer Vielzahl von in der Zentraleinheit (30) gespeicherten Steuerprogramme, wobei die Steuerprogramme verschiedene erste Feuchtigkeitsprozentwerte speichern,
- Empfangen und Verarbeiten des Prozentsatzes der Trocknungsgeschwindigkeitsdaten und des Prozentsatzes der vom Feuchtigkeitsmesssensor (28) gemessenen Feuchtigkeitsdaten unter Verwendung der Zentraleinheit (30),
- Auswählen eines Steuerprogramms aus der Vielzahl gespeicherter Steuerprogramme unter Verwendung des Prozentsatzes der empfangenen Trocknungsgeschwindigkeitsdaten und
- Öffnen des Ventils (22) der Rohrleitung (20) der Düse (18) in der Zone (12) des Feuchtigkeitsmesssensors (28), wenn der empfangene Feuchtigkeitsprozentwert niedriger ist als der erste gespeicherte Feuchtigkeitsprozentwert, der in dem gewählten Steuerprogramm gespeichert ist, und Abgeben von Flüssigkeitsnebel mit der Düse (18) auf die vorgegebene Zone (12).

2. Verfahren nach Anspruch 1, **gekennzeichnet durch** Speichern eines Sprühdauerwerts oder eines zweiten Feuchtigkeitsprozentwerts, der größer als der erste Feuchtigkeitsprozentwert ist, im Steuerprogramm und, nach Öffnen des einen oder der mehreren Ventile (22) der vorgegebenen Zone (12), Schließen derselben nach Ablauf einer Zeitspanne, die dem Sprühdauerwert entspricht, oder nach Erreichen des zweiten Feuchtigkeitsprozentwerts in der vorgegebenen Zone (12).

3. Verfahren nach Anspruch 1 oder 2, **gekennzeichnet durch** Anordnen von äußeren und inneren Steuersensoren (38, 39) außerhalb des Gebäudes (100) und der Zonen (12) sowie im Innenraum (16) des Gebäudes (100), wobei die Sensoren (38, 39) in Datenverbindung mit der Zentraleinheit (30) stehen und zur Temperaturmessung geeignet sind, und Auswählen des Steuerprogramms mittels der Zentraleinheit (30) unter Berücksichtigung der von den äußeren und inneren Steuersensoren (38, 39) gemessenen Temperaturdaten.

4. Verfahren nach einem der Ansprüche 1 bis 3, **gekennzeichnet durch** Anordnen von Temperatursensoren (40) in Datenverbindung mit der Zentraleinheit (30) in den Zonen (12) und Auswählen des Steuerprogramms unter Berücksichtigung der von den Temperatursensoren (40) über die Zentraleinheit (30) empfangenen Temperaturdaten.

5. Verfahren nach einem der Ansprüche 1 bis 4, **gekennzeichnet durch** Bereitstellen eines oder mehrerer Durchflussmesssensoren (24) zum Messen der durch den Querschnitt der Rohrleitung (20) strömenden Flüssigkeitsmenge und/oder eines oder mehrerer Druckmesssensoren (26) zum Messen des Drucks und der Druckänderung der durch den Querschnitt der Rohrleitung (20) strömenden Flüssigkeit, bevorzugt eines Druckmessumformers, in Datenverbindung mit der Zentraleinheit (30), Empfangen und Verarbeiten der vom Durchflussmesssensor (24) und/oder vom Druckmesssensor (26) gemessenen Daten mit der Zentraleinheit (30) und Auswählen des Steuerprogramms unter Berücksichtigung der mit der Zentraleinheit (30) empfangenen und verarbeiteten Daten.

6. Verfahren nach einem der Ansprüche 1 bis 5, **gekennzeichnet durch** Bereitstellen eines Feuchtigkeitsmesssensors (28), der eine Messfläche (28a) mit einem Wärmedurchgangskoeffizienten und/oder spektralen Emissionsgrad und/oder Adsorptionskoeffizienten aufweist, der dem Wärmedurchgangskoeffizienten und/oder spektralen Emissionsgrad und/oder Adsorptionskoeffizienten der Außenfläche (14) des Gebäudes (100) entspricht.

7. Verfahren nach einem der Ansprüche 1 bis 6, **dadurch gekennzeichnet, dass** die Außenfläche (14) des Gebäudes (100) in 5 bis 15, bevorzugt in 8 bis 12 Zonen (12) unterteilt wird.

8. Verdunstungskühlereinrichtung (10) zur Kühlung einer Vielzahl von Zonen (12) und eines Mikroklimas in der Umgebung der Vielzahl von Zonen (12) eines Gebäudes (100), das eine in die Vielzahl von Zonen (12) unterteilte Außenfläche (14) und einen Innenraum (16) aufweist, wobei die Verdunstungskühlereinrichtung (10) umfasst:
- in Zonen (12) angeordnete Düsen (18) zum Befeuchten der Zonen (12) mit einem Flüssigkeitsnebel, bevorzugt Wassernebel,
- mit den Düsen (18) verbundene Rohrleitungen (20) zum Zuführen von Flüssigkeit zu den Düsen (18),
- Ventile (22), die mit den Rohrleitungen (20) verbunden sind, um den Fluss der Flüssigkeit in den Rohrleitungen (20) zu regulieren,
- Feuchtigkeitsmesssensoren (28), die mit einer Außenmessfläche (28a) bereitgestellt sind und in den Zonen (12) angeordnet sind, um einen Feuchtigkeitsprozentwert der Feuchtigkeit der Außenmessfläche (28a) zu messen, und
- eine elektronische Zentraleinheit (30) in Wirkverbindung mit den Ventilen (22) und in Datenverbindung mit den in den Zonen (12) angeordneten Feuchtigkeitsmesssensoren (28), wobei die elektronische Zentraleinheit (30) zum Empfangen, Verarbeiten und Speichern von Daten geeignet ist, **dadurch gekennzeichnet, dass** der mit der Außenmessfläche (28a) bereitgestellte Feuchtigkeitsmesssensor (28) zum Messen des Prozentsatzes der Trocknungsgeschwindigkeit der Außenmessfläche (28a) angepasst ist, und eine Vielzahl von Steuerprogrammen, die erste Feuchtigkeitsprozentwerte spezifizieren, in der Zentraleinheit (30) gespeichert sind, wobei die Zentraleinheit (30) konfiguriert ist zum:
- Empfangen und Verarbeiten des vom Feuchtigkeitsmesssensor (28) gemessenen Prozentsatzes der Trocknungsgeschwindigkeitsdaten,
- Auswählen eines Steuerprogramms aus der Vielzahl gespeicherter Steuerprogramme basierend auf dem empfangenen Prozentsatz der Trocknungsgeschwindigkeitsdaten und
- Öffnen des Ventils (22), das mit der Rohrleitung (20) der Düse (18) verbunden ist, die zu der Zone (12) des Feuchtigkeitsmesssensors (28) gehört, für den Fall, dass der erste Prozentsatz des Feuchtigkeitswertes, der in dem ausgewählten Steuerprogramm gespeichert ist, erreicht wird, wodurch die vorgegebene Zone (12) mit Flüssigkeitsnebel befeuchtet wird.

9. Verdunstungskühlereinrichtung (10) nach Anspruch 8, **dadurch gekennzeichnet, dass** im Steuerprogramm ein Sprühdauerwert oder ein zweiter Feuchtigkeitswert, der höher als der erste Feuchtigkeitsprozentwert ist, gespeichert ist, und die Zentraleinheit (30) konfiguriert ist, das eine oder die mehreren Ventile (22) bei Erreichen des ersten Feuchtigkeitsprozentwertes zu öffnen und sie nach Ablauf einer Zeitspanne, die dem Sprühdauerwert entspricht, oder bei Erreichen des zweiten Feuchteprozentwertes zu schließen.

10. Verdunstungskühlereinrichtung (10) nach Anspruch 8 oder 9, **dadurch gekennzeichnet, dass** sie Folgendes umfasst:
- einen äußeren Steuersensor (38), der zur Temperaturmessung geeignet ist und mit der Zentraleinheit (30) in Datenverbindung steht und außerhalb der Zonen (12) und des Gebäudes (100) angeordnet ist, und
- einen inneren Steuersensor (39), der zur Temperaturmessung geeignet ist und mit der Zentraleinheit (30) in Datenverbindung steht und im Innenraum (16) des Gebäudes (100) angeordnet ist, und die Zentraleinheit (30) konfiguriert ist, die von dem äußeren und inneren Steuersensor (38, 39) empfangenen Temperaturdaten bei der Auswahl des Steuerprogramms zu berücksichtigen.

11. Verdunstungskühlereinrichtung (10) nach einem der Ansprüche 8 bis 10, **dadurch gekennzeichnet, dass** sie Temperatursensoren (40) enthält, die in den Zonen (12) angeordnet sind und mit der Zentraleinheit (30) in Datenverbindung stehen, und die Zentraleinheit (30) konfiguriert ist, die von den Temperatursensoren (40) empfangenen Temperaturdaten bei der Auswahl des Steuerprogramms zu berücksichtigen.

12. Verdunstungskühlereinrichtung (10) nach einem der Ansprüche 8 bis 11, **dadurch gekennzeichnet, dass** der Wärmeübertragungskoeffizient und/oder der spektrale Emissionsgrad und/oder der Adsorptionskoeffizient der Messoberfläche (28a) des einen oder der mehreren Feuchtigkeitsmesssensoren (28) so ausgewählt sind, dass sie dem Wärmeübertragungskoeffizienten und/oder dem spektralen Emissionsgrad und/oder dem Adsorptionskoeffizienten der Außenfläche (14) des Gebäudes (100) entsprechen.

13. Verdunstungskühlereinrichtung (10) nach einem der Ansprüche 10 bis 12, **dadurch gekennzeichnet, dass** die Wirkverbindung zwischen der Zentraleinheit (30) und dem einen oder den mehreren Ventilen (22) und/oder die Datenverbindung zwischen der Zentraleinheit (30) und dem einen oder den mehreren Feuchtigkeitsmesssensoren (28) und/oder zwischen der Zentraleinheit (30) und den äußeren und inneren Steuersensoren (38, 39) mit elektrischen Kabeln (32) bereitgestellt ist, die Signalübertragung gewährleisten, und dass in der Kabelwirkverbindung zwischen der Zentraleinheit (30) und dem einen oder den mehreren Ventilen (22) und/oder in der Datenverbindung zwischen der Zentraleinheit (30) und dem einen oder den mehreren Feuchtigkeitsmesssensoren (28) ein oder mehrere Blitz- und Überspannungsschutzelemente (34), bevorzugt Optokoppler (34a), eingebaut sind, die geeignet sind, Signalübertragung zu gewährleisten.

14. Verdunstungskühlereinrichtung (10) nach einem der Ansprüche 8 bis 13, **dadurch gekennzeichnet, dass** mindestens ein Feuchtigkeitsmesssensor (28) mit einer Verarbeitungseinheit (36) verbunden ist, die die gemessenen Daten verarbeiten und an die Zentraleinheit (30) übermitteln kann.

15. Verdunstungskühlereinrichtung (10) nach einem der Ansprüche 8 bis 14, **dadurch gekennzeichnet, dass** das Ventil (22) als ein elektrohydraulisches Ventil (22) bereitgestellt ist.

16. Verdunstungskühlereinrichtung (10) nach einem der Ansprüche 8 bis 15, **dadurch gekennzeichnet, dass** die Rohrleitung (20) einen oder mehrere Durchflussmesssensoren (24) zum Messen der durch den Querschnitt der Rohrleitung (20) strömenden Flüssigkeitsmenge und/oder einen oder mehrere Druckmesssensoren (26) zum Messen des Drucks und der Druckänderung der durch den Querschnitt der Rohrleitung (20) strömenden Flüssigkeit, bevorzugt einen Druckmessumformer, umfasst.

## Revendications

1. Procédé de refroidissement d'une pluralité de zones (12) et d'un microclimat au voisinage de la pluralité de zones (12) d'un bâtiment (100) qui présente une surface externe (14) divisée en la pluralité de zones (12) et un espace interne (16), le procédé comprenant les étapes consistant à :
- agencer des buses (18) pour distribuer une pulvérisation de liquide, de préférence une pulvérisation d'eau dans les zones (12),
- fournir des conduites (20) raccordées aux buses (18) pour alimenter les buses (18) en liquide,
- fournir des vannes (22) raccordées aux conduites (20) pour réguler le débit de liquide dans les conduites (20),
- agencer des capteurs de mesure d'humidité (28) pourvus d'une surface de mesure externe (28a) dans les zones (12) de la surface externe (14) du bâtiment (100) pour mesurer un pourcentage d'humidité sur la surface de mesure externe (28a),
- fournir une unité centrale (30) en raccordement opérationnel avec les vannes (22) et en raccordement de données avec les capteurs de mesure d'humidité (28),
**caractérisé en ce que** le capteur de mesure d'humidité (28) muni de la surface de mesure externe (28a), en plus d'être adapté pour mesurer le pourcentage d'humidité sur la surface de mesure externe (28a), est également adapté pour mesurer un pourcentage de taux de séchage, et au cours du procédé :
- mesurer le pourcentage d'humidité sur la surface de mesure externe (28a) en utilisant le capteur de mesure d'humidité (28) et déterminer les données de pourcentage de taux de séchage,
- fournir une pluralité de programmes de commande stockés dans l'unité centrale (30), lesquels programmes de commande stockent diverses premières valeurs de pourcentage d'humidité,
- recevoir et traiter les données de pourcentage de taux de séchage et les données de pourcentage d'humidité mesurées par le capteur de mesure d'humidité (28) à l'aide de l'unité centrale (30),
- sélectionner un programme de commande parmi la pluralité de programmes de commande stockés en utilisant les données de pourcentage de taux de séchage reçues, et
- ouvrir la vanne (22) de la conduite (20) de la buse (18) dans la zone (12) du capteur de mesure d'humidité (28) si la valeur de pourcentage d'humidité reçue est inférieure à la première valeur de pourcentage d'humidité stockée dans le programme de commande sélectionné, et distribuer une pulvérisation de liquide à l'aide de la buse (18) jusque sur la zone (12) donnée.

2. Procédé selon la revendication 1, **caractérisé par** un stockage d'une valeur de durée de pulvérisation ou d'une seconde valeur de pourcentage d'humidité supérieurs à la première valeur de pourcentage d'humidité dans le programme de commande, et, après ouverture des une ou plusieurs vannes (22) de la zone (12) donnée, leur fermeture après qu'un laps de temps s'est écoulé, qui correspond à la valeur de durée de pulvérisation ou après que la seconde valeur de pourcentage d'humidité a été atteinte dans la zone (12) donnée.

3. Procédé selon la revendication 1 ou 2, **caractérisé par** un agencement de capteurs de commande externe et interne (38, 39) à l'extérieur du bâtiment (100) et des zones (12) et dans l'espace interne (16) du bâtiment (100), lesquels capteurs (38, 39) sont en raccordement de données avec l'unité centrale (30) et sont capables de mesurer une température, et une sélection du programme de commande à l'aide de l'unité centrale (30) en prenant en considération les données de température mesurées par les capteurs de commande interne et externe (38, 39).

4. Procédé selon l'une quelconque des revendications 1 à 3, **caractérisé par** un agencement de capteurs de température (40) dans un raccordement de données avec l'unité centrale (30) dans les zones (12), et une sélection du programme de commande en prenant en considération les données de température reçues depuis les capteurs de température (40) en utilisant l'unité centrale (30).

5. Procédé selon l'une quelconque des revendications 1 à 4, **caractérisé par** une fourniture d'un ou plusieurs capteurs de débitmètre (24) pour mesurer la quantité de liquide s'écoulant à travers la section transversale de la conduite (20) et/ou un ou plusieurs capteurs de mesure de pression (26) pour mesurer la pression et le changement de pression du liquide s'écoulant à travers la section transversale de la conduite (20), de préférence un transducteur de pression, en raccordement de données avec l'unité centrale (30), une réception et un traitement des données mesurées par le capteur de débitmètre (24) et/ou le capteur de mesure de pression (26) à l'aide de l'unité centrale (30), et une sélection du programme de commande en prenant en considération les données reçues et traitées à l'aide de l'unité centrale (30).

6. Procédé selon l'une quelconque des revendications 1 à 5, **caractérisé par** une fourniture d'un capteur de mesure d'humidité (28) présentant une surface de mesure (28a) avec un coefficient de transmission thermique et/ou une émissivité spectrale et/ou un coefficient d'adsorption qui correspond au coefficient de transmission thermique, et/ou à l'émissivité spectrale, et/ou au coefficient d'adsorption de la surface externe (14) du bâtiment (100).

7. Procédé selon l'une quelconque des revendications 1 à 6, **caractérisé par** une division de la surface externe (14) du bâtiment (100) en 5 à 15, de préférence 8 à 12 zones (12).

8. Appareil de refroidissement par évaporation (10) pour le refroidissement d'une pluralité de zones (12) et d'un microclimat au voisinage de la pluralité de zones (12) d'un bâtiment (100) qui présente une surface externe (14) divisée en la pluralité de zones (12) et un espace interne (16), lequel appareil de refroidissement par évaporation (10) comprend :
- des buses (18) agencées dans des zones (12) pour humidifier les zones (12) avec une pulvérisation de liquide, de préférence une pulvérisation d'eau,
- des conduites (20) raccordées aux buses (18) pour alimenter les buses (18) en liquide,
- des vannes (22) raccordées aux conduites (20) pour réguler l'écoulement du liquide dans les conduites (20),
- des capteurs de mesure d'humidité (28) pourvus d'une surface de mesure externe (28a) agencés dans les zones (12) pour mesurer un pourcentage d'humidité de la surface de mesure externe (28a), et
- une unité centrale électronique (30) en raccordement opérationnel avec les vannes (22) et en raccordement de données avec les capteurs de mesure d'humidité (28) agencés dans les zones (12), l'unité centrale électronique (30) étant apte à recevoir, traiter et stocker des données, **caractérisé en ce que** le capteur de mesure d'humidité (28) pourvu de la surface de mesure externe (28a) est adapté pour mesurer le pourcentage de taux de séchage de la surface de mesure externe (28a), et une pluralité de programmes de commande spécifiant des premières valeurs de pourcentage d'humidité sont stockés dans l'unité centrale (30), laquelle unité centrale (30) est configurée pour :
- recevoir et traiter les données de pourcentage de taux de séchage mesurées par le capteur de mesure d'humidité (28),
- sélectionner un programme de commande parmi la pluralité de programmes de commande stockés sur la base des données de pourcentage de taux de séchage reçues, et
- ouvrir la vanne (22) raccordée à la conduite (20) de la buse (18) appartenant à la zone (12) du capteur de mesure d'humidité (28) dans le cas où la première valeur de pourcentage d'humidité stockée dans le programme de commande sélectionné est atteinte, humidifiant ainsi la zone (12) donnée avec une pulvérisation de liquide.

9. Appareil de refroidissement par évaporation (10) selon la revendication 8, **caractérisé en ce qu'**une valeur de durée de pulvérisation ou une seconde valeur d'humidité supérieure à la première valeur de pourcentage d'humidité est stockée dans le programme de commande, et l'unité centrale (30) est configurée pour ouvrir les une ou plusieurs vannes (22) dans le cas où la première valeur de pourcentage d'humidité est atteinte et pour les fermer après qu'un laps de temps s'est écoulé, correspondant à la valeur de durée de pulvérisation, ou lorsque la seconde valeur de pourcentage d'humidité est atteinte.

10. Appareil de refroidissement par évaporation (10) selon la revendication 8 ou 9, **caractérisé en ce qu'**il comprend
- un capteur de commande externe (38) apte à mesurer une température et étant en raccordement de données avec l'unité centrale (30) et agencé à l'extérieur des zones (12) et du bâtiment (100), et
- un capteur de commande interne (39) apte à mesurer une température et étant en raccordement de données avec l'unité centrale (30) et agencé dans l'espace interne (16) du bâtiment (100), et l'unité centrale (30) est configurée pour prendre en considération les données de température reçues depuis les capteurs de commande externe et interne (38, 39) lors de la sélection du programme de commande.

11. Appareil de refroidissement par évaporation (10) selon l'une quelconque des revendications 8 à 10, **caractérisé en ce qu'**il contient des capteurs de température (40) agencés dans les zones (12) et étant en raccordement de données avec l'unité centrale (30), et l'unité centrale (30) est configurée pour prendre en considération les données de température reçues depuis les capteurs de température (40) lors de la sélection du programme de commande.

12. Appareil de refroidissement par évaporation (10) selon l'une quelconque des revendications 8 à 11, **caractérisé en ce que** le coefficient de transmission de chaleur, et/ou l'émissivité spectrale, et/ou le coefficient d'adsorption de la surface de mesure (28a) d'un ou plusieurs capteurs de mesures d'humidité (28) sont sélectionnée pour correspondre au coefficient de transmission thermique, et/ou à l'émissivité spectrale, et/ou au coefficient d'adsorption de la surface externe (14) du bâtiment (100).

13. Appareil de refroidissement par évaporation (10) selon l'une quelconque des revendications 10 à 12, **caractérisé en ce que** le raccordement opérationnel entre l'unité centrale (30) et les une ou plusieurs vannes (22), et/ou le raccordement de données entre l'unité centrale (30) et les un ou plusieurs capteurs de mesure d'humidité (28), et/ou entre l'unité centrale (30) et les capteurs de commande externe et interne (38, 39) sont munis de câbles électriques (32) assurant une transmission de signal, et un ou plusieurs éléments de protection contre la foudre et les surtensions (34), de préférence des optocoupleurs (34a), aptes à assurer une transmission de signal sont installés dans le raccordement opérationnel par câble entre l'unité centrale (30) et les une ou plusieurs vannes (22) et/ou dans le raccordement de données entre l'unité centrale (30) et les un ou plusieurs capteurs de mesure d'humidité (28).

14. Appareil de refroidissement par évaporation (10) selon l'une quelconque des revendications 8 à 13, **caractérisé en ce qu'**au moins un capteur de mesure d'humidité (28) est raccordé à une unité de traitement (36) capable de traiter les données mesurées et de les transmettre à l'unité centrale. (30).

15. Appareil de refroidissement par évaporation (10) selon l'une quelconque des revendications 8 à 14, **caractérisé en ce que** la vanne (22) est prévue sous la forme d'une vanne électrohydraulique (22).

16. Appareil de refroidissement par évaporation (10) selon l'une quelconque des revendications 8 à 15, **caractérisé en ce que** la conduite (20) comprend un ou plusieurs capteurs de débitmètre (24) pour mesurer la quantité de liquide s'écoulant à travers la section transversale de la conduite (20) et/ou un ou plusieurs capteurs de mesure de pression (26) pour mesurer la pression et le changement de pression du liquide s'écoulant à travers la section transversale de la conduite (20), de préférence un transducteur de pression.
